# EUROPÄISCHE PATENTSCHRIFT

(11) **EP 1 481 736 B1**
(45) Veröffentlichungstag und Bekanntmachung des Hinweises auf die Patenterteilung: **19.03.2008**
(21) Anmeldenummer: 04011676.6
(22) Anmeldetag: 17.05.2004
(51) Int. Cl.: B05B 12/10, B05B 12/08

(54) **Fördereinrichtung für eine Lackieranlage**
Supply device for a painting installation
Dispositif d'alimentation pour une installation de peinture

(30) Priorität: 27.05.2003 DE 10324076
(43) Veröffentlichungstag der Anmeldung: 01.12.2004
(73) Patentinhaber: Dürr Systems GmbH, 70435 Stuttgart (DE)
(72) Erfinder: Klumpp, Marcus, 74223 Flein (DE); Michelfelder, Manfred, 71711 Steinheim (DE)
(74) Vertreter: Beier, Ralph

(56) Entgegenhaltungen:
- US-A- 4 562 088
- US-A- 4 848 657
- US-B1- 6 329 013

## Beschreibung

Die Erfindung betrifft eine Fördereinrichtung für ein Fluid, insbesondere zur Förderung eines Lacks in einer Lackieranlage, gemäß dem Oberbegriff des Anspruchs 1, eine Lackieranlage mit einer derartigen Fördereinrichtung gemäß Anspruch 14 sowie ein zugehöriges Betriebsverfahren gemäß dem Oberbegriff des Anspruchs 15.

Lackieranlagen zur Lackierung von Gegenständen, wie beispielsweise Kraftfahrzeugkarosserieteilen, weisen zur Förderung von Lack üblicherweise eine Fördereinrichtung mit einer Pumpe und einer an die Pumpe angeschlossenen Schlauchleitung auf.

Problematisch hierbei ist, dass die an die Pumpe angeschlossene Schlauchleitung nachgiebig ist, was bei einer Änderung der Förderleistung der Pumpe zu einem verzögerten Ansprechen am Ausgang der Schlauchleitung führt. Dieses auch als "Schlauchatmung" bezeichnete Verhalten ist insbesondere bei einem dynamischen Betrieb der Lackieranlage mit schnell wechselnden Förderleistungen der Pumpe und entsprechend häufigen Änderungen des Lackstroms unerwünscht, da nach einer Sollwertänderung zunächst Abweichungen gegenüber dem gewünschten Lackstrom auftreten, was die Qualität des Lackierergebnisses beeinträchtigen kann.

Darüber hinaus weist die zur Förderung des Lacks verwendete Pumpe ebenfalls ein verzögerungsbehaftetes Ansprechverhalten auf, was zu den Nachteilen der Schlauchatmung hinzu kommt.

Es ist deshalb beispielsweise aus EP 1 298 504 A1 bekannt, die zur Förderung des Lacks dienende Pumpe bei einer Sollwertänderung des gewünschten Lackstroms zu übersteuern, damit sich möglichst schnell der gewünschte Lackstrom einstellt. Hierzu wird die Pumpe mit einem Regler angesteuert, der unter anderem ein Differentialglied aufweist, wobei das Übersteuerungsverhalten durch einen Reglerparameter K_{D} des Reglers festgelegt wird.

Der optimale Wert des Reglerparameters K_{D} und damit auch des Übersteuerungsverhaltens des Reglers hängt unter anderem von der gewünschten Sollwertänderung des Lackstroms ab. So ist bei einer geringfügigen Sollwertänderung nur eine entsprechend kleine Übersteuerung erforderlich, wohingegen die Übersteuerung bei einer größeren Sollwertänderung entsprechend größer sein sollte, damit der Lackstrom möglichst schnell auf den neuen Sollwert eingeregelt wird. Es ist deshalb aus EP 1 298 504 A1 weiterhin bekannt, den Reglerparameter K_{D} in Abhängigkeit von der gewünschten Sollwertänderung festzulegen. Hierzu werden zweidimensionale Kennfelder verwendet, in denen geeignete Werte des Reglerparameters K_{D} in Abhängigkeit von dem Ausgangswert des Lackstroms und dem neuen Sollwert gespeichert sind. Bei einer Sollwertänderung wird der geeignete Reglerparameter K_{D} also entsprechend dem Ausgangswert des Lackstroms und dem gewünschten neuen Sollwert aus dem Kennfeld ausgelesen, um den Regler für die Pumpe anschließend mit dem entsprechenden Übersteuerungsverhalten zu betreiben.

Der Optimalwert des Reglerparameters K_{D} hängt jedoch nicht nur von der gewünschten Sollwertänderung des Lackstroms ab, sondern wird auch durch anlagenspezifische Parameter beinflusst, wie beispielsweise die Länge des verwendeten Schlauchs, die Schlauchsteifigkeit, den Schlauchquerschnitt und das zeitliche Ansprechverhalten der verwendeten Pumpe. Es ist deshalb aus EP 1 298 504 A1 weiterhin bekannt, die in dem Kennfeld gespeicherten Werte für den Reglerparameter K_{D} im Rahmen einer Lernfunktion an die anlagenspezifischen Parameter anzupassen.

Schließlich hängt der Optimalwert für den Reglerparameter K_{D} auch von lackspezifischen Parametern ab, wie insbesondere der Viskosität des verwendeten Lacks. Dies wird bei dem aus EP 1 298 504 A1 bekannten Verfahren dadurch berücksichtigt, dass für zwei vorgegebene Viskositätswerte des Lacks jeweils ein Kennfeld mit den optimalen Reglerparametern K_{D} ermittelt und abgespeichert wird, wobei die den beiden Kennfeldern zugeordneten Viskositätswerte den Viskositätsbereich der verwendbaren Lacke begrenzen. Beim Betrieb der Lackieranlage muss der Benutzer dann den tatsächlichen Viskositätswert des verwendeten Lacks manuell eingeben, woraufhin die Lackieranlage entsprechend der gewünschten Sollwertänderung die zugehörigen Reglerparameter K_{D} aus den beiden Kennfeldern ausliest und zwischen den beiden ausgelesenen Werten für den Reglerparameter K_{D} interpoliert, um den für den tatsächlichen Viskositätswert des Lacks geeigneten Reglerparameter K_{D} zu ermitteln.

Nachteilig an dem vorstehend beschriebenen bekannten Verfahren ist deshalb die Tatsache, dass der Reglerparameter K_{D} beim Betrieb der Lackieranlage vom Benutzer an die tatsächliche Viskosität des verwendeten Lacks angepasst werden muss.

Zum einen kann dies zu Fehlern führen, wenn der Bediener versehentlich einen falschen Viskositätswert eingibt oder die Lackspezifikation hinsichtlich des Viskositätswertes fehlerhaft ist.

Zum anderen erfordert das bekannte Verfahren bei einem Lackwechsel stets eine Neueingabe der Viskosität des verwendeten Lacks, was den Lackwechsel aufwändig macht.

Darüber hinaus führt die Interpolation des Reglerparameters K_{D} zwischen den aus den beiden Kennfeldern ausgelesenen Grenzwerten des Reglerparameters K_{D} nur zu einer Annäherung an den optimalen Wert des Reglerparameters K_{D}, so dass das Übersteuerungsverhalten bei dem bekannten Verfahren nicht optimal ist.

Weiterhin sind aus EP 1 298 504 A1, DE 41 36 387 A1, DE 43 25 044 C2, DE 39 42 496 A1, DE 101 11 383 A1 und WO 97/30792 A1 Fördereinrichtungen bekannt, bei denen jedoch ebenfalls keine Adaption des Übersteuerungsverhaltens in Abhängigkeit von der Viskosität des verwendeten Fördermediums erfolgt.

Schließlich sind aus US 4 848 657, US 4 562 088 und US 6 329 013 Fördereinrichtungen und Förderverfahren bekannt, die jedoch kein Übersteuerungsverhalten aufweisen.

Der Erfindung liegt deshalb die Aufgabe zugrunde, das vorstehend beschriebene bekannte Verfahren bzw. die zugehörige Vorrichtung entsprechend zu verbessern.

Diese Aufgabe wird durch eine Fördereinrichtung gemäß dem Oberbegriff des Anspruchs 1, eine Lackieranlage mit einer derartigen Fördereinrichtung gemäß Anspruch 14 und ein entsprechendes Betriebsverfahren gemäß dem Oberbegriff von Anspruch 15 gelöst.

Die Erfindung umfasst die allgemeine technische Lehre, das Übersteuerungsverhalten automatisch an die Viskosität des verwendeten Lacks anzupassen, damit auf eine manuelle Eingabe der Viskosität verzichtet werden kann.

Die Erfindung schließt jedoch nicht aus, dass der Bediener die Viskosität des verwendeten Lacks trotzdem eingibt, was beispielsweise zu Kontrollzwecken vorteilhaft sein kann.

Darüber hinaus ist die Erfindung nicht auf Fördereinrichtungen beschränkt, die in Lackieranlagen zur Förderung eines Lacks Verwendung finden. Vielmehr kann das erfindungsgemäße Prinzip auch bei anderen Fördereinrichtungen für Fluide eingesetzt werden.

Auch ist es nicht erforderlich, dass die Pumpe nur durch einen Regler angesteuert wird, der das gewünschte Übersteuerungsverhalten aufweist. Es kann beispielsweise vorteilhaft sein, zusätzlich zu dem Regler eine Vorsteuerung zu verwenden, um das Einstellverhalten weiter zu optimieren. Grundsätzlich ist es sogar möglich, dass anstelle eines Reglers zur Ansteuerung der Pumpe nur eine rückkopplungsfreie Steuerung eingesetzt wird.

Zur Adaption des Übersteuerungsverhaltens weist die erfindungsgemäße Fördereinrichtung eine Adaptionseinheit auf, die das Übersteuerungsverhalten automatisch an die Viskosität des verwendeten Fluids anpasst, wobei die Adaption vorzugsweise in Abhängigkeit von dem ermittelten Druck erfolgt.

In einem bevorzugten Ausführungsbeispiel wird das Übersteuerungsverhalten jedoch nicht nur an die Viskosität oder andere fluidspezifische Parameter des verwendeten Fluids angepasst, sondern auch an anlagenspezifische Parameter, die das zeitliche Ansprechverhalten bei einer Sollwertänderung beeinflussen, wie beispielsweise die Länge einer an die Pumpe angeschlossenen Leitung, die Nachgiebigkeit der Leitung, der Querschnitt der Leitung, das zeitliche Ansprechverhalten der Pumpe oder ähnliches.

Vorzugsweise weist die Adaptionseinheit zur Festlegung eines das Übersteuerungsverhalten bestimmenden Reglerparameters zwei Kennlinienglieder auf, wobei das eine Kennlinienglied vorzugsweise die anlagenspezifischen Parameter (z.B. Schlauchnachgiebigkeit, Schlauchlänge und Ansprechverhalten der Pumpe) berücksichtigt, während das andere Kennlinienglied vorzugsweise die fluidspezifischen Parameter (z.B. Viskosität des Fluids) berücksichtigt.

In dem anlagenspezifischen Kennlinienglied ist hierbei vorzugsweise eine Kennlinie abgespeichert, die den Zusammenhang zwischen dem stationären Wert des Drucks und dem resultierenden Optimalwert des Reglerparameters K_{D} definiert, während in dem lackspezifischen Kennlinienglied vorzugsweise eine Kennlinie abgespeichert ist, die den Zusammenhang zwischen dem stationären Wert des Lackstroms bzw. der entsprechenden Förderleistung der Pumpe einerseits und dem resultierenden Druck andererseits wiedergibt.

Bei einem Lackwechsel sollte dann nur die lackspezifische Kennlinie adaptiert werden, die vorzugsweise den Zusammenhang zwischen dem Lackstrom und dem resultierenden Druck wiedergibt.

Diese Adaption erfolgt vorzugsweise außerhalb des normalen Förder- bzw. Lackierbetriebs, wobei vorzugsweise der gesamte Betriebsbereich des Lackstroms (z.B. von 100 bis 800 ml/Min.) durchfahren wird.

Dabei wird vorzugsweise der Druck und der resultierende Fluidstrom gemessen, um mehrere Stützstellen für die lackspezifische Kennlinie zu ermitteln.

Die Messung des Drucks für die Adaption des Übersteuerungsverhaltens erfolgt vorzugsweise durch einen Drucksensor, der stromabwärts hinter der Pumpe angeordnet ist. Vorzugsweise ist der Drucksensor unmittelbar stromabwärts hinter der Pumpe und stromaufwärts vor der nachfolgenden Leitung angeordnet, um den Ausgangsdruck der Pumpe zu messen. Es ist jedoch grundsätzlich auch möglich, den Drucksensor am Ende der Leitung anzuordnen, wobei die Druckmessung jedoch durch die Schlauchatmung beeinflusst wird, so dass bei der Druckmessung abgewartet werden muss, bis sich der stationäre Druckwert einstellt.

Die Messung des Fluidstroms für die Adaption des Übersteuerungsverhaltens erfolgt vorzugsweise durch einen Fluidstromsensor, der beispielsweise den Fluidmassenstrom oder den Fluidvolumenstrom misst, wobei der Fluidstromsensor vorzugsweise stromabwärts am Ende der Leitung angeordnet ist. Es ist jedoch grundsätzlich auch möglich, den Fluidstromsensor an anderer Stelle anzuordnen, wie beispielsweise unmittelbar am Ausgang der Pumpe.

Es ist jedoch alternativ auch möglich, dass die Adaption des Übersteuerungsverhaltens während des normalen Förder- bzw. Lackierbetriebs erfolgt, so dass auch Änderungen von Anlagenparametern (z.B. Schlauchsteifigkeit) und Lackparametern (z.B. Viskosität) während des Betriebs berücksichtigt werden können.

Die Adaption des Übersteuerungsverhaltens während des normalen Förder- bzw. Lackierbetriebs ist insbesondere dann möglich, wenn ein das Übersteuerungsverhalten bestimmender Parameter (z.B. Reglerparameter K_{D}) in Abhängigkeit von dem Druckwert aus einem Kennlinienglied ausgelesen wird, wobei der Druckwert in Abhängigkeit von dem vorgegebenen Sollwert für den Förderstrom der Pumpe bzw. den Lackstrom aus einem weiteren Kennlinienglied ausgelesen wird. Die in diesem Kennlinienglied abgespeicherte Kennlinie definiert den Zusammenhang zwischen dem vorgegebenen Sollwert für die Förderleistung der Pumpe bzw. den gewünschten Lackstrom und dem resultierenden Druck, wobei die Steigung dieser Kennlinie beispielsweise auch die Viskosität wiederspiegelt. Im Rahmen der Adaption kann dann der anhand der Kennlinie modellierte Druckwert mit einem tatsächlich gemessenen Druckwert verglichen werden, um die gespeicherte Kennlinie zu überprüfen. Bei einer Abweichung zwischen dem anhand der Kennlinie modellierten Druckwert und dem tatsächlich gemessenen Druckwert kann dann im Rahmen der Adaption beispielsweise die Steigung der gespeicherten Kennlinie verändert werden, um zu erreichen, dass die gespeicherte Kennlinie den tatsächlichen physikalischen Zusammenhang besser wiedergibt.

Bei einer Verwendung eines Reglers zur Ansteuerung der Pumpe wird vorzugsweise ein PID-Regler oder ein PD-Regler eingesetzt, jedoch sind grundsätzlich auch andere Reglertypen verwendbar.

Andere vorteilhafte Weiterbildungen der Erfindung sind in den Unteransprüchen gekennzeichnet oder werden nachstehend zusammen mit der Beschreibung des bevorzugten Ausführungsbeispiels der Erfindung anhand der Figuren näher erläutert. Es zeigen:
- Figur 1: ein regelungstechnisches Ersatzschaltbild einer erfindungsgemäßen Fördereinrichtung zur Lackförderung in einer Lackieranlage,
- Figur 2a: die Adaption der lackspezifischen Reglerkennlinie bei der Fördereinrichtung aus Figur 1,
- Figur 2b: die Adaption der anlagenspezifischen Reglerkennlinie bei der Fördereinrichtung aus Figur 1,
- Figur 2c: den normalen Betrieb der Fördereinrichtung aus Figur 1 in Form eines Flussdiagramms,
- Figur 3a: eine lackspezifische Kennlinie, die für verschiedene Viskositätswerte des Lacks den Zusammenhang zwischen dem Lackstrom und dem resultierenden Druck wiedergibt,
- Figur 3b: eine anlagenspezifische Kennlinie, die für verschiedene Werte der Schlauchnachgiebigkeit den Zusammenhang zwischen dem Druck und dem resultierenden Optimalwert des Reglerparameters wiedergibt,

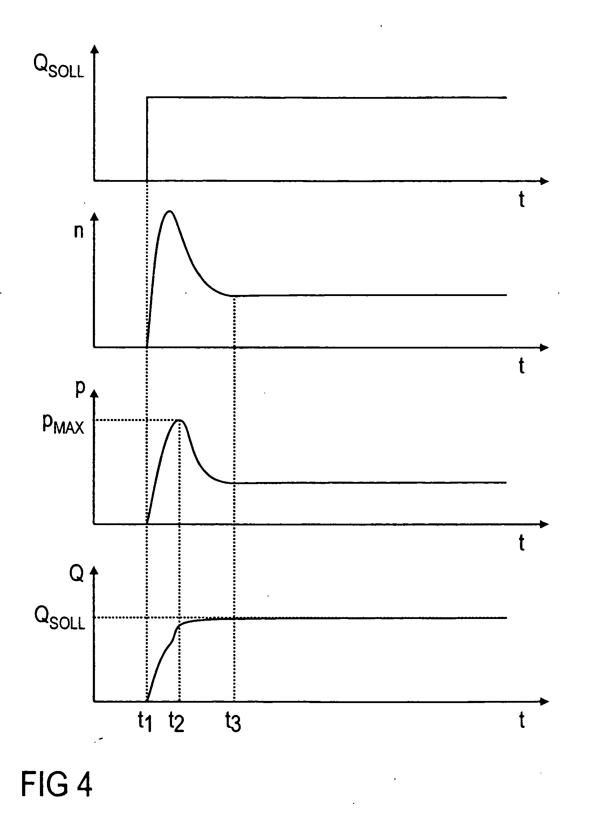

- Figur 4: mehrere Zeitdiagramme, die das zeitliche Ansprechverhalten der erfindungsgemäßen Fördereinrichtung verdeutlichen,
- Figur 5: ein regelungstechnisches Ersatzschaltbild eines alternativen Ausführungsbeispiels einer erfindungsgemäßen Fördereinrichtung sowie

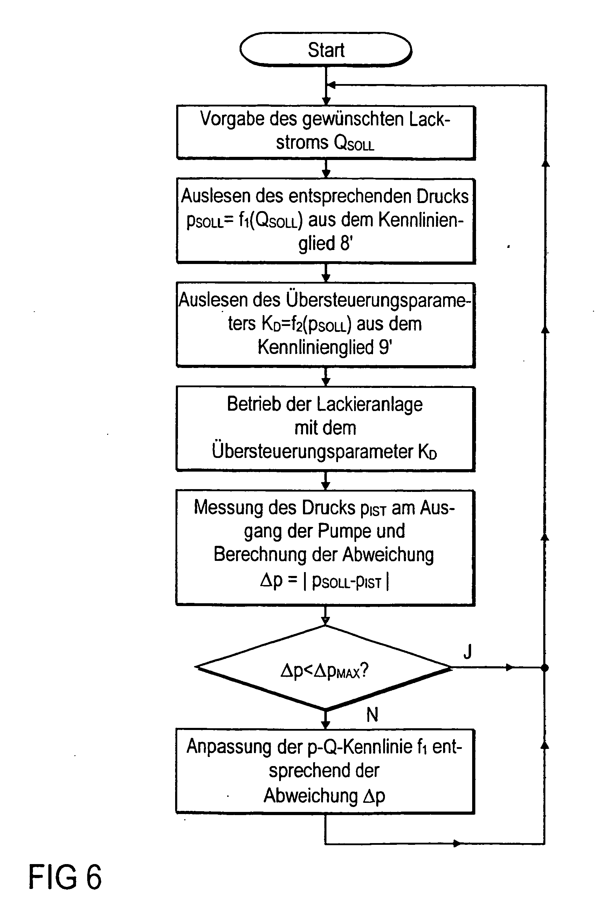

- Figur 6: das Betriebsverfahren der Fördereinrichtung aus Figur 5 in Form eines Flussdiagramms.

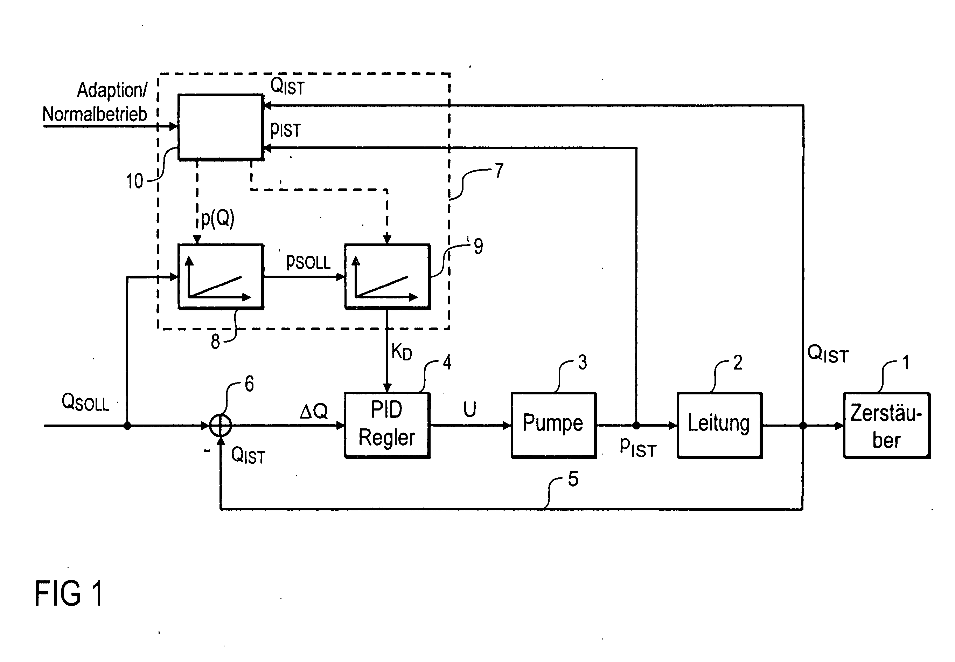

Die in Figur 1 in Form eines regelungstechnischen Ersatzschaltbildes dargestellte erfindungsgemäße Fördereinrichtung dient in einer Lackieranlage zur Beschichtung von Kraftfahrzeugkarosserieteilen dazu, einen Zerstäuber 1 mit Lack zu versorgen.

Hierzu ist der Zerstäuber 1 über eine Schlauchleitung 2 mit einer Pumpe 3 verbunden, deren Förderleistung durch einen PID-Regler 4 eingestellt wird.

Weiterhin weist die Fördereinrichtung einen Lackmengensensor auf, der zur Vereinfachung nicht dargestellt ist und einen Lackstrom Q_{IST} misst, der dem Zerstäuber 1 zugeführt wird.

Der gemessene Lackstrom Q_{IST} wird in einer Rückkopplungsschleife 5 auf einen Subtrahierer 6 zurückgeführt, der aus dem gemessenen Lackstrom Q_{IST} und einem vorgegebenen Sollwert Q_{SOLL} für den Lackstrom eine Sollwertabweichung ΔQ berechnet, die dem PID-Regler 4 zugeführt wird. Der PID-Regler 4 steuert die Pumpe 3 dann mit einer entsprechenden Spannung U an, wodurch die Regelabweichung ΔQ ausgeregelt wird.

Der PID-Regler 4 weist hierbei ein Differentialglied auf, das bei einer Sollwertänderung zu einer Übersteuerung entsprechend einem vorgegebenen Reglerparameter K_{D} führt, damit der Lackstrom Q_{IST} möglichst schnell auf den vorgegebenen Sollwert Q_{SOLL} eingeregelt wird.

Die Übersteuerung durch den Reglerparameter K_{D} soll sowohl lackspezifische Parameter (z.B. Viskosität des Lacks) als auch anlagenspezifische Parameter (z.B. Schlauchnachgiebigkeit, Schlauchlänge, etc.) berücksichtigen, um ein hochdynamisches Regelverhalten zu erzielen und die Schlauchatmung zu kompensieren.

Der Reglerparameter K_{D}wird hierbei durch eine Adaptionseinheit 7 vorgegeben, die sowohl die lackspezifischen Parameter als auch die anlagenspezifischen Parameter berücksichtigt und den Reglerparameter K_{D} entsprechend einstellt.

Hierzu weist die Adaptionseinheit 7 zwei Kennlinienglieder 8, 9 auf, wobei das Kennlinienglied 9 den Zusammenhang zwischen dem stationären Druck p stromabwärts hinter der Pumpe 3 und dem resultierenden Optimalwert des Reglerparameters K_{D} wiedergibt, während das Kennlinienglied 8 den Zusammenhang zwischen dem stationären Wert des Lackstroms Q und dem resultierenden stationären Druckwert p repräsentiert.

Das Kennlinienglied 8 berücksichtigt hierbei lackspezifische Parameter (z.B. Viskosität), während das Kennlinienglied 9 anlagenspezifische Parameter (z.B. Schlauchlänge, Schlauchquerschnitt) berücksichtigt.

Im Normalbetrieb der erfindungsgemäßen Fördereinrichtung wird aus dem Kennlinienglied 8 entsprechend dem vorgegebenen Sollwert Q_{SOLL} für den Lackstrom der zugehörige stationäre Druckwert p ausgelesen, der dann dem Kennlinienglied 9 zugeführt wird, wobei das Kennlinienglied 9 in Abhängigkeit von dem Druck p den Optimalwert des Reglerparameters K_{D} an den PID-Regler 4 weiter gibt.

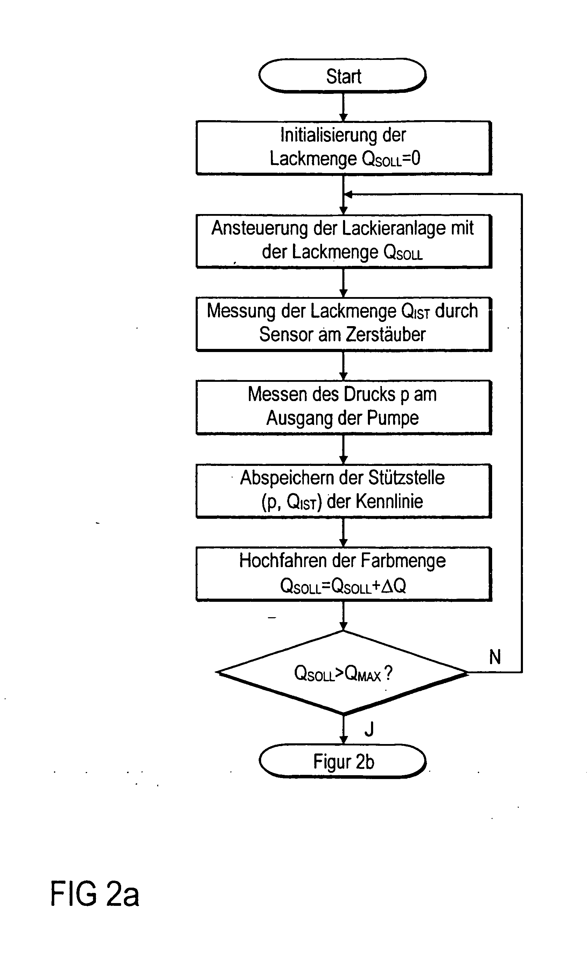

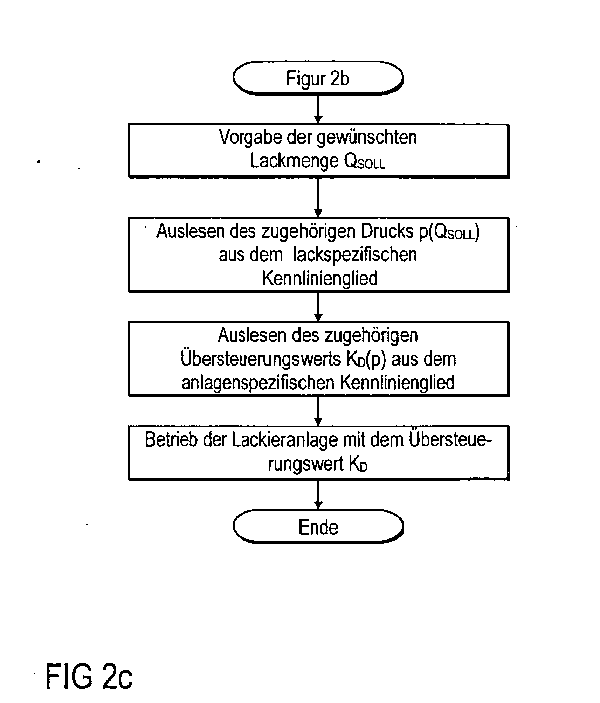

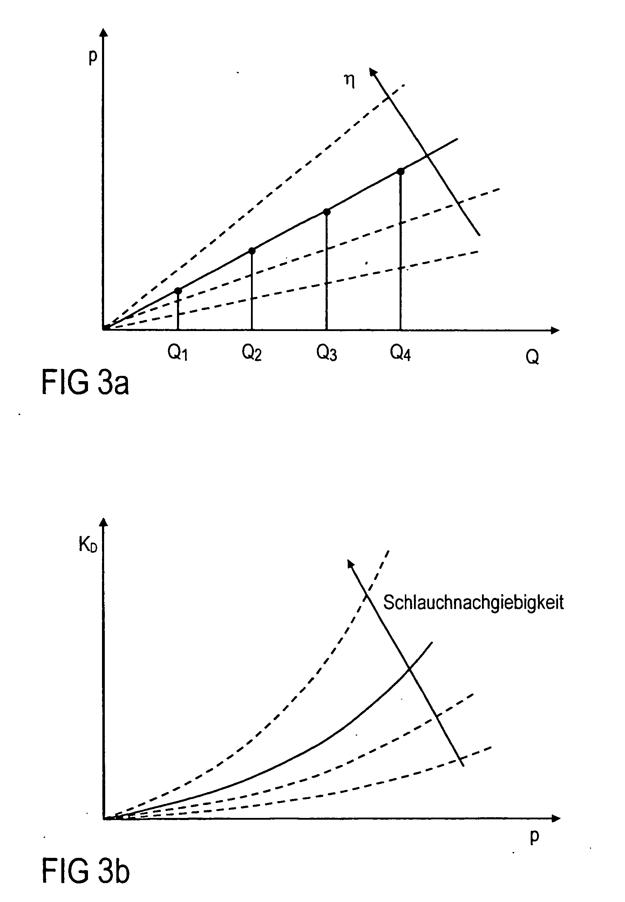

Die in dem Kennlinienglied 8 gespeicherte Kennlinie hängt von der Viskosität des verwendeten Lacks ab, wie aus Figur 3a ersichtlich ist. Bei einem Wechsel des verwendeten Lacks erfolgt deshalb eine in Figur 2a dargestellte Adaption des Kennlinienglieds 8, um die in dem Kennlinienglied 8 gespeicherte lackspezifische Kennlinie an die tatsächliche Viskosität des neuen Lacks anzupassen.

Im Rahmen dieser Adaption wird der gesamte Lackstrombereich von Null ausgehend durchfahren, indem entsprechende Sollwerte Q_{SOLL} vorgegeben werden. Beim Durchfahren des Lackstrombereichs im Rahmen der Adaption des Reglerparameters K_{D} wird an mehreren Stützstellen jeweils der Lackstrom Q gemessen und an eine Auswertungseinheit 10 weitergeleitet.

Darüber hinaus wird beim Durchfahren des Lackstrombereichs im Rahmen der lackspezifischen Adaption auch der Druck p am Ausgang der Pumpe 3 gemessen, wozu ein separater Drucksensor vorgesehen ist, der zur Vereinfachung nicht dargestellt ist.

Die Auswertungseinheit 10 ermittelt bei der lackspezifischen Adaption aus den Stützstellen (p, Q) eine Kennlinie p(Q), die in dem Kennlinienglied 8 abgespeichert wird.

Bei einer Änderung der anlagenspezifischen Parameter (z.B. Schlauchlänge, Schlauchquerschnitt, Schlauchnachgiebigkeit) muss darüber hinaus die in dem Kennlinienglied 9 gespeicherte Kennlinie adaptiert werden, was in herkömmlicher Weise geschehen kann, wie beispielsweise in EP 1 298 504 A1 beschrieben ist.

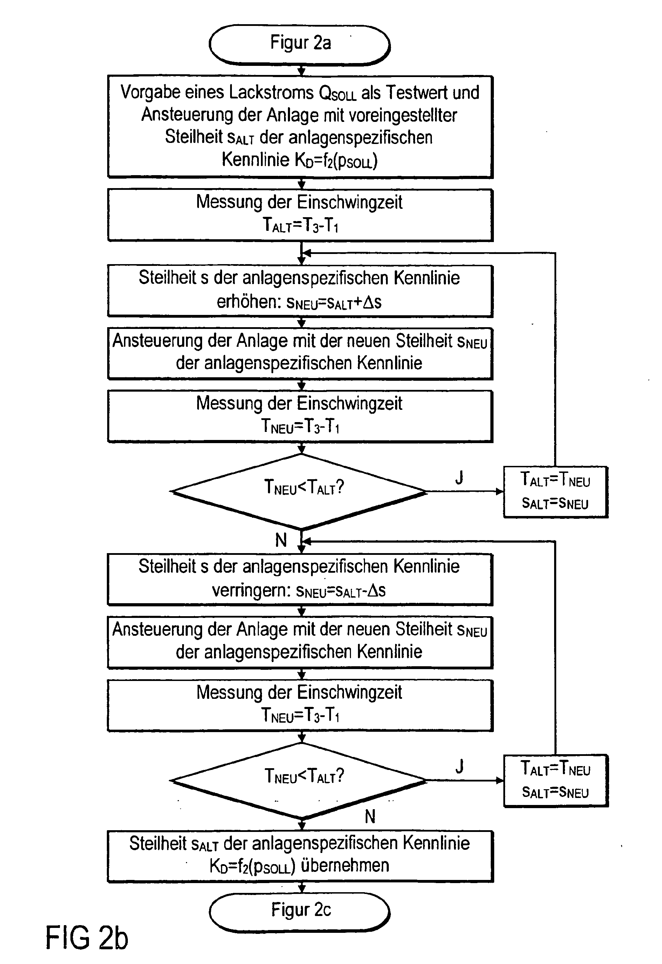

Die anlagenspezifische Adaption des Übersteuerungsverhaltens ist beispielhaft und vereinfacht in Figur 2b dargestellt.

Bei dieser Adaption wird die erfindungsgemäße Fördereinrichtung zunächst mit der voreingestellten anlagenspezifischen Kennlinie betrieben, wobei die Einschwingzeit auf den vorgegebenen Sollwert Q_{SOLL} gemessen wird.

Anschließend wird dann die Steilheit der anlagenspezifischen Kennlinie testweise erhöht, woraufhin überprüft wird, ob die Erhöhung der Steilheit der anlagenspezifischen Kennlinie zu einer Verkürzung der Einschwingzeit führt. Diese Optimierung wird solange fortgeführt, bis keine Verbesserung der Einschwingzeit mehr erreicht.

Falls die Erhöhung der Steilheit der anlagenspezifischen Kennlinie dagegen keine Verbesserung bringt, so wird die Steilheit der anlagenspezifischen Kennlinie testweise verringert, woraufhin wieder überprüft wird, ob die Verringerung der Steilheit der anlagenspezifischen Kennlinie die Einschwingzeit verkürzt. Diese Optimierung wird wiederum solange fortgeführt, bis keine Verbesserung mehr auftritt.

Nach diesem Optimierungsvorgang wird die in dem Kennlinienglied 9 gespeicherte anlagenspezifische Kennlinie dann mit der optimierten Steilheit abgespeichert.

Anschließend wird die Fördereinrichtung dann in der zuvor beschriebenen Weise betrieben, wobei der Reglerparameter K_{D} automatisch an die Viskosität des verwendeten Lacks angepasst ist.

Vorteilhaft an der vorstehend beschriebenen erfindungsgemäßen Fördereinrichtung für eine Lackieranlage ist die Tatsache, dass bei einem Lackwechsel keine Eingabe der Viskosität des verwendeten Lacks erforderlich ist.

Darüber hinaus treten bei der Bestimmung des Reglerparameters K_{D} keine Interpolationsfehler auf, wie dies im Stand der Technik der Fall ist.

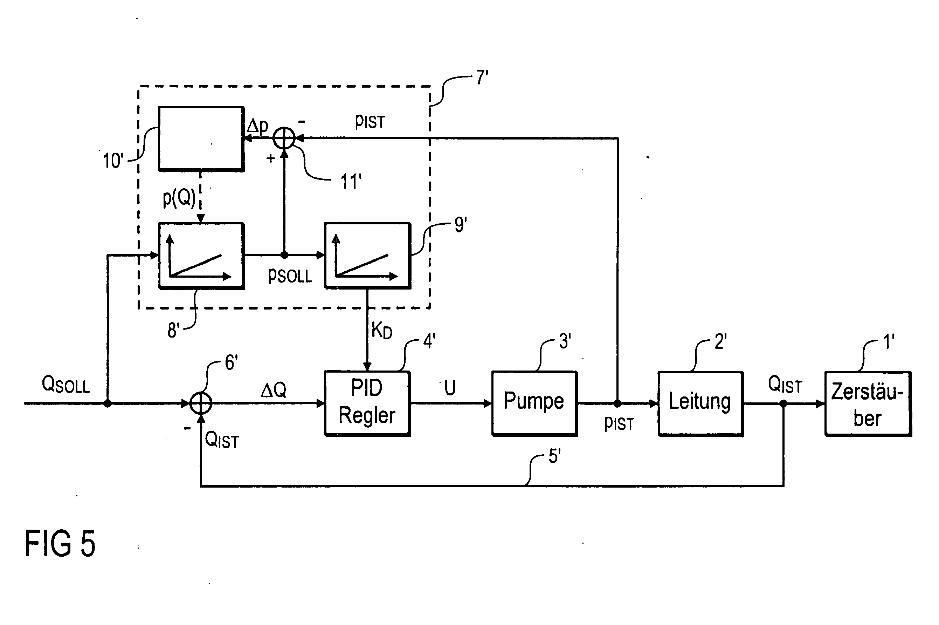

Die in Figur 5 in Form eines regelungstechnischen Ersatzschaltbildes gezeigte Fördereinrichtung stimmt weitgehend mit der in Figur 1 gezeigten Fördereinrichtung überein, so dass im Folgenden nur die Besonderheiten dieses Ausführungsbeispiels beschrieben werden, während ansonsten auf die vorstehende Beschreibung zu Figur 1 verwiesen wird.

Darüber hinaus werden im folgenden für entsprechende Bauteile dieselben Bezugszeichen verwendet, die lediglich zur Unterscheidung durch ein zusätzliches Apostroph gekennzeichnet sind. Eine Besonderheit dieses Ausführungsbeispiels besteht darin, dass die Adaption des Übersteuerungsverhaltens während des normalen Lackierbetriebs erfolgt, so dass auch kontinuierliche Änderungen von Lackparametern, wie beispielsweise der Lackviskosität, während des Lackierbetriebs bei der Adaption berücksichtigt werden können.

Die Bestimmung des Reglerparameters K_{D} erfolgt hierbei in der gleichen Weise, wie bei dem in Figur 1 gezeigten Ausführungsbeispiels, indem aus dem Kennlinienglied 8' entsprechend dem vorgegebenen Sollwert Q_{SOLL} der entsprechende Druckwert P_{SOLL} ausgelesen wird. Der Druckwert P_{SOLL} dient dann als Eingangswert für das Kennlinienglied 9', das den Reglerparameter K_{D} entsprechend der gespeicherten Kennlinie ermittelt und an den PID-Regler 4' weiter gibt.

Bei einer korrekten Adaption stimmt der von dem Kennlinienglied 8' ausgegebene Druckwert p_{SOLL} mit dem tatsächlich gemessenen Druckwert p_{IST} überein, so dass keine weitere Adaption erforderlich ist.

Bei einer Abweichung zwischen dem entsprechend der Kennlinie modellierten Druckwert p_{SOLL} und dem tatsächlich gemessenen Druckwert p_{IST} gibt die in dem Kennlinienglied 8' abgespeicherte Kennlinie die tatsächlichen physikalischen Verhältnisse dagegen nicht richtig wieder.

Die Adaptionseinheit 7' weist deshalb in diesem Ausführungsbeispiel einen Subtrahierer 11' auf, der eingangsseitig mit dem Drucksensor und mit dem Kennlinienglied 8' verbunden ist und die Abweichung Δp zwischen dem modellierten Druckwert p_{SOLL} und dem tatsächlich gemessenen Druckwert p_{IST} berechnet und an die Auswertungseinheit 10' weiterleitet, wobei die Auswertungseinheit 10' die Steigung der in dem Kennlinienglied 8' abgelegten Kennlinie entsprechend der Abweichung Δp ändert, damit die Kennlinie die tatsächlichen physikalischen Verhältnisse richtig wiedergibt.

Die Erfindung ist nicht auf das vorstehend beschriebene bevorzugte Ausführungsbeispiel beschränkt. Vielmehr ist eine Vielzahl von Varianten und Abwandlungen möglich, die ebenfalls von dem Erfindungsgedanken Gebrauch machen und deshalb in den Schutzbereich fallen.

### Bezugszeichenliste

- 1, 1': Zerstäuber
- 2, 2': Schlauchleitung
- 3, 3': Pumpe
- 4, 4': PID-Regler
- 5, 5': Rückkopplungsschleife
- 6, 6': Subtrahierer
- 7, 7': Adaptionseinheit
- 8, 8', 9, 9': Kennlinienglieder
- 10, 10': Auswertungseinheit
- 11': Subtrahierer

## Patentansprüche

1. Fördereinrichtung für ein Fluid, insbesondere zur Förderung eines Lacks in einer Lackieranlage, mit
- einer Pumpe (3, 3') mit einer einstellbaren Förderleistung zur Förderung des Fluids,
- einer an die Pumpe (3, 3') angeschlossenen Leitung (2, 2') zur Weiterleitung des Fluids,
- einem Regler (4, 4') und/oder einer Steuerung zur Einstellung der Förderleistung der Pumpe (3, 3') entsprechend einem vorgegebenen Sollwert (Q_{SOLL}) , wobei der Regler (4, 4') oder die Steuerung ein vorgegebenes Übersteuerungsverhalten (K_{D}) aufweist,
- einer Adaptionseinheit (7, 7') zur Anpassung des Übersteuerungsverhaltens (K_{D}),
- einem stromabwärts hinter Pumpe (3, 3') angeordneten Drucksensor, an den die Adaptionseinheit (7, 7') eingangsseitig angeschlossen ist
**dadurch gekennzeichnet, dass**
die Adaptionseinheit (7, 7') das Übersteuerungsverhalten (K_{D}) in Abhängigkeit von dem ermittelten Druck (p_{IST}) entsprechend der Viskosität des Fluids automatisch adaptiert, um eine manuelle Eingabe der Viskosität zu ersparen.

2. Fördereinrichtung nach Anspruch 1, **dadurch gekennzeichnet, dass** die Adaptionseinheit (7, 7') eingangsseitig mit einem Fluidstromsensor zur Messung des Fluidstroms (Q_{IST}) verbunden ist, wobei die Adaptionseinheit (7, 7') das Übersteuerungsverhalten (K_{D}) auch in Abhängigkeit von dem gemessenen Fluidstrom (Q_{IST}) adaptiert.

3. Fördereinrichtung nach Anspruch 2, **dadurch gekennzeichnet, dass** der Fluidstromsensor am Ausgang der Leitung (2, 2') angeordnet ist.

4. Fördereinrichtung nach einem der vorhergehenden Ansprüche, **dadurch gekennzeichnet, dass** der Drucksensor am Ausgang der Pumpe (3, 3') stromaufwärts vor der Leitung (2, 2') angeordnet ist und den Pumpenausgangsdruck (p_{IST}) misst.

5. Fördereinrichtung nach einem der vorhergehenden Ansprüche, **dadurch gekennzeichnet, dass** die Adaptionseinheit (7, 7') ein erstes Kennlinienglied (9, 9') aufweist, in dem eine anlagenspezifische erste Kennlinie abgespeichert ist, wobei die erste Kennlinie den Zusammenhang zwischen dem Druck (p_{SOLL}) und einem das Übersteuerungsverhalten bestimmenden Übersteuerungsparameter (K_{D}) definiert.

6. Fördereinrichtung nach einem der vorhergehenden Ansprüche, **dadurch gekennzeichnet, dass** die Adaptionseinheit (7, 7') ein zweites Kennlinienglied (8, 8') aufweist, in dem eine viskositätsabhängige zweite Kennlinie abgespeichert ist, wobei die zweite Kennlinie den Zusammenhang zwischen dem Sollwert (Q_{SOLL}) für die Förderleistung oder dem Fluidstrom (Q_{IST}) einerseits und dem resultierenden Druck (p_{IST}) andererseits wiedergibt.

7. Fördereinrichtung nach den Ansprüchen 5 und 6, **dadurch gekennzeichnet, dass** die erste Kennlinie anlagenspezifisch ist, während die zweite Kennlinie fluidspezifisch ist.

8. Fördereinrichtung nach Anspruch 6 oder 7, **dadurch gekennzeichnet, dass** die Adaptionseinheit (7) eine Auswertungseinheit (10) aufweist, wobei die Auswertungseinheit (10) zur Ermittlung des anlagen- und fluidspezifischen Zusammenhangs zwischen dem Fluidstrom (Q_{IST}) und dem resultierenden Druck (p_{IST}) eingangsseitig mit dem Drucksensor und dem Fluidstromsensor verbunden ist, während die Auswertungseinheit (10) ausgangsseitig mit dem zweiten Kennlinienglied (8) verbunden ist, um die zweite Kennlinie entsprechend dem ermittelten Zusammenhang einzustellen.

9. Fördereinrichtung nach Anspruch 6 oder 7, **dadurch gekennzeichnet, dass** die Adaptionseinheit eine Auswertungseinheit (10', 11') aufweist,
wobei die Auswertungseinheit (10', 11') eingangsseitig mit dem Drucksensor und dem zweiten Kennlinienglied (8') verbunden ist, um die Richtigkeit der zweiten Kennlinie anhand des gemessenen Drucks und des gemessenen Fluidstroms zu überprüfen,
während die Auswertungseinheit (10', 11') ausgangsseitig mit dem zweiten Kennlinienglied (8') verbunden ist, um die zweite Kennlinie entsprechend der Überprüfung einzustellen.

10. Fördereinrichtung nach einem der vorhergehenden Ansprüche, **dadurch gekennzeichnet, dass** der Regler (4, 4') die Pumpe (3, 3') mit einer Stellgröße (U) ansteuert und in einer Rückkopplungsschleife (5, 5') eine stromabwärts hinter der Pumpe (3, 3') an der Leitung (2, 2') ermittelte Regelgröße (Q_{IST}) zurückführt.

11. Fördereinrichtung nach Anspruch 10, **dadurch gekennzeichnet, dass** die Regelgröße (Q_{IST}) der von dem Fluidstromsensor gemessene Fluidstrom ist.

12. Fördereinrichtung nach einem der vorhergehenden Ansprüche, **dadurch gekennzeichnet, dass** das der Regler (4, 4') ein Differenzialglied aufweist.

13. Fördereinrichtung nach einem der vorhergehenden Ansprüche, **dadurch gekennzeichnet, dass** der Regler (4, 4') ein PD-Regler (4, 4') oder ein PID-Regler (4, 4') ist.

14. Lackieranlage mit einer Fördereinrichtung nach einem der vorhergehenden Ansprüche.

15. Betriebsverfahren für eine Fördereinrichtung für ein Fluid, insbesondere in einer Lackieranlage, mit den folgenden Schritten:
- Vorgabe eines Sollwerts (Q_{SOLL}) zur Einstellung der Förderleistung einer Pumpe (3, 3'), an die zur Weiterleitung des Fluids eine Leitung (2, 2') angeschlossen ist,
- Übersteuerung der Pumpe (3, 3') entsprechend dem vorgegebenen Sollwert (Q_{SOLL}) mit einem vorgegebenen Übersteuerungsverhalten (K_{D}),
- Adaption des Übersteuerungsverhaltens (K_{D}),
**dadurch gekennzeichnet, dass**
das Übersteuerungsverhalten (K_{D}) entsprechend der Viskosität des Fluids automatisch adaptiert wird, um eine manuelle Eingabe der Viskosität zu ersparen.

16. Betriebsverfahren nach Anspruch 14, **gekennzeichnet durch** folgende Schritte:
- Ermittlung des Drucks (p_{IST}) stromabwärts hinter der Pumpe (3, 3'),
- Adaption des Übersteuerungsverhaltens (K_{D}) in Abhängigkeit von dem ermittelten Druck (p_{IST}) entsprechend der Viskosität des Fluids.

17. Betriebsverfahren nach Anspruch 16, **dadurch gekennzeichnet, dass** die Adaption des Übersteuerungsverhaltens (K_{D}) nur in Abhängigkeit von dem Sollwert (Q_{SOLL}) und dem ermittelten Druck (p_{IST}) erfolgt.

18. Betriebsverfahren nach einem der Ansprüche 15 bis 17, **gekennzeichnet durch** folgende Schritte:
- Ermittlung der Förderleistung der Pumpe (3, 3') oder des geförderten Fluidstroms (Q_{IST}),
- Adaption des Übersteuerungsverhaltens (K_{D}) in Abhängigkeit von der ermittelten Förderleistung und/oder dem ermittelten Fluidstrom (Q_{IST}) entsprechend der Viskosität des Fluids.

19. Betriebsverfahren nach einem der Ansprüche 15 bis 18, **gekennzeichnet durch** folgende Schritte:
- Ermittlung einer ersten Kennlinie, die den Zusammenhang zwischen dem Druck (p_{SOLL}) und dem zugehörigen Übersteuerungsverhalten (K_{D}) wiedergibt,
- Ermittlung des dem vorgegebenen Sollwert (Q_{SOLL}) für die Förderleistung entsprechenden Drucks (p_{SOLL}),
- Bestimmung des Übersteuerungsverhaltens (K_{D}) aus dem Druck (p_{SOLL}) entsprechend der ersten Kennlinie.

20. Betriebsverfahren nach Anspruch 19, **gekennzeichnet durch** folgende Schritte:
- Ermittlung einer zweiten Kennlinie, die den Zusammenhang zwischen der Förderleistung der Pumpe (3, 3') oder dem Fluidstrom (Q_{SOLL}) einerseits und dem resultierenden Druck (p_{SOLL}) andererseits wiedergibt,
- Bestimmung des Drucks (p_{SOLL}) aus dem vorgegebenen Sollwert (Q_{SOLL}) für die Förderleistung der Pumpe (3, 3') oder den Fluidstrom.

21. Betriebsverfahren nach den Ansprüchen 19 und 20, **dadurch gekennzeichnet, dass** die erste Kennlinie anlagenspezifisch ist, während die zweite Kennlinie fluidspezifisch ist.

22. Betriebsverfahren nach einem der Ansprüche 15 bis 21, **dadurch gekennzeichnet, dass** die Adaption des Übersteuerungsverhaltens (K_{D}) entsprechend der Viskosität des Fluids außerhalb des normalen Förderbetriebs erfolgt, wobei ein vorgegebener Förderleistungsbereich der Pumpe (3, 3') durchfahren wird.

23. Betriebsverfahren nach einem der Ansprüche 15 bis 22, **dadurch gekennzeichnet, dass** die Adaption des Übersteuerungsverhaltens (K_{D}) während des normalen Förderbetriebs erfolgt.

24. Betriebsverfahren nach einem der Ansprüche 15 bis 23, **gekennzeichnet durch** folgende Schritte:
- Vergleich des stromabwärts hinter der Pumpe (3') ermittelten Drucks (p_{IST}) mit dem anhand der zweiten Kennlinie entsprechend dem vorgegebenen Sollwert (Q_{SOLL}) bestimmten Drucks (p_{SOLL})
- Adaption der zweiten Kennlinie in Abhängigkeit von dem Vergleich.

25. Betriebsverfahren nach Anspruch 24, **dadurch gekennzeichnet, dass** in Abhängigkeit von dem Vergleich die Steigung der zweiten Kennlinie verändert wird.

## Claims

1. A supply device for a fluid, particularly for supplying a paint in a painting installation, including
- a pump (3,3') with an adjustable output for supplying the fluid,
- a conduit (2,2') connected to the pump (3,3') for conducting the fluid,
- a regulator (4,4') and/or a controller for adjusting the output of the pump (3,3') in accordance with a predetermined desired value (Q_{DES}), whereby the regulator (4,4') or the controller has a predetermined overcontrol behaviour (K_{D}),
- an adaptor unit (7,7') for adjusting the overcontrol behaviour (K_{D}),
- a pressure sensor, which is arranged downstream of the pump (3,3') and to which the inlet of the adaptor unit (7,7') is connected
**characterised in that**
the adaptor unit (7,7') automatically adapts the overcontrol behaviour (K_{D}) in dependence on the measured pressure (PACT) in accordance with the viscosity of the fluid in order to save manually inputting the viscosity.

2. A supply device as claimed in claim 1, **characterised in that** the adaptor unit (7,7') is connected on the inlet side to a fluid flow sensor for measuring the fluid flow (Q_{ACT}), wherein the adaptor unit (7,7') adapts the overcontrol behaviour (K_{D}) in dependence also on the measured fluid flow (Q_{ACT}).

3. A supply device as claimed in claim 2, **characterised in that** the fluid flow sensor is arranged at the outlet of the conduit (2,2').

4. A supply device as claimed in one of the preceding claims, **characterised in that** the pressure sensor is arranged at the outlet of the pump (3,3') upstream of the conduit (2,2') and measures the pump outlet pressure (p_{ACT}).

5. A supply device as claimed in one of the preceding claims, **characterised in that** the adaptor unit (7,7') includes a first characteristic element (9,9'), in which an installation-specific first characteristic is stored, wherein the first characteristic defines the relationship between the pressure (p_{DES}) and an overcontrol parameter (K_{D}) determining the overcontrol behaviour.

6. A supply device as claimed in one of the preceding claims, **characterised in that** the adaptor unit (7,7') includes a second characteristic element (8,8'), in which a viscosity-dependent second characteristic is stored, whereby the second characteristic reproduces the relationship between the desired value (Q_{DES}) for the output or the fluid flow (Q_{ACT}) on the one hand and the resulting pressure (p_{ACT}) on the other hand.

7. A supply device as claimed in claims 5 and 6, **characterised in that** the first characteristic is installation-specific whilst the second characteristic is fluid-specific.

8. A supply device as claimed in claim 6 or 7, **characterised in that** the adaptor unit (7) includes an evaluation unit (10), wherein the evaluation unit (10) is connected, for the purpose of determining the installation-specific and fluid-specific relationship between the fluid flow (Q_{ACT}) and the resulting pressure (p_{ACT}), on the input side to the pressure sensor and the fluid flow sensor, whilst the evaluation unit (10) is connected on the outlet side to the second characteristic element (8) in order to adjust the second characteristic in accordance with the determined relationship.

9. A supply device as claimed in claim 6 or 7, **characterised in that** the adaptor unit includes an evaluation unit (10',11'), wherein the evaluation unit (10',11') is connected on the inlet side to the pressure sensor and the second characteristic element (8') in order to check the correctness of the second characteristic with regard to the measured pressure and the measured fluid flow, whilst the evaluation unit (10,11') is connected on the outlet side to the second characteristic element (8') in order to adjust the second characteristic in accordance with the check.

10. A supply device as claimed in one of the preceding claims, **characterised in that** the regulator (4,4') controls the pump (3,3') with a control parameter (U_{ACT}) and feeds a control parameter determined downstream of the pump (3,3') back to the conduit (2,2') in a feedback loop (5,5').

11. A supply device as claimed in claim 10, **characterised in that** the control parameter (Q_{ACT}) is the fluid flow measured by the fluid flow sensor.

12. A supply device as claimed in one of the preceding claims, **characterised in that** the regulator (4,4') includes a differential element.

13. A supply device as claimed in one of the preceding claims, **characterised in that** the regulator (4,4') is a PD regulator (4,4') or a PID regulator (4,4').

14. A painting installation including a supply device as claimed in one of the preceding claims.

15. An operating method for a supply device for a fluid, particularly in a painting installation, with the following steps:
- provision of a desired value (Q_{DES}) for adjusting the output of a pump (3,3'), to which a conduit (2,2') is connected for conducting the fluid,
- overcontrolling the pump (3,3') in accordance with the predetermined desired value (Q_{DES}) with a predetermined overcontrol behaviour (K_{D}),
- adapting the overcontrol behaviour (K_{D})
**characterised in that**
the overcontrol behaviour (K_{D}) is automatically adapted in accordance with the viscosity of the fluid in order to save manually inputting the viscosity.

16. An operating method as claimed in claim 14, **characterised by** the following steps:
- determining the pressure (p_{ACT}) downstream of the pump (3,3'),
- adapting the overcontrol behaviour (K_{D}) in dependence on the determined pressure (p_{ACT}) in accordance with the viscosity of the fluid.

17. An operating method as claimed in claim 16, **characterised in that** the adaptation of the overcontrol behaviour (K_{D}) is effected in dependence only on the desired value (Q_{DES}) and the determined pressure (p_{ACT}).

18. An operating method as claimed in one of claims 15 to 17, **characterised by** the following steps:
- determining the output of the pump (3,3') or the supplied fluid flow (Q_{ACT}),
- adapting the overcontrol behaviour (K_{D}) in dependence on the determined output and/or the determined fluid flow (Q_{ACT}) in accordance with the viscosity of the fluid.

19. An operating method as claimed in of claims 15 to 18, **characterised by** the following steps:
- determining a first characteristic, which represents the relationship between the pressure (p_{DES}) and the associated overcontrol behaviour (K_{D}),
- determining the pressure (p_{DES}) corresponding to the predetermined desired value (Q_{DES}) for the output,
- determining the overcontrol behaviour (K_{D}) from the pressure (p_{DES}) corresponding to the first characteristic.

20. An operating method as claimed in claim 19, **characterised by** the following steps:
- determining a second characteristic, which represents the relationship between the output of the pump (3,3') of the fluid flow (Q_{DES}) on the one hand and the resulting pressure (p_{DES}) on the other hand,
- determining the pressure (p_{DES}) from the predetermined value (Q_{DES}) for the output of the pump (3,3') or the fluid flow.

21. An operating method as claimed in claims 19 and 20, **characterised in that** the first characteristic is installation-specific whilst the second characteristic is fluid-specific.

22. An operating method as claimed in one of claims 15 to 21, **characterised in that** the adaptation of the overcontrol behaviour (K_{D}) is effected in accordance with the viscosity of the fluid outside the normal supply operation, whereby the output of the pump (3,3') moves through a predetermined output range.

23. An operating method as claimed in one of claims 15 to 22, **characterised in that** the adaptation of the overcontrol behaviour (K_{D}) is effected during normal supply operation.

24. An operating method as claimed in one of claims 15 to 23, **characterised by** the following steps:
- comparing the pressure (p_{ACT}) determined downstream of the pump (3') with the pressure (p_{DES}) determined with reference , to the second characteristic in accordance with the predetermined desired value (Q_{DES}),
- adaptation of the second characteristic in dependence on the comparison.

25. An operating method as claimed in claim 24, **characterised in that** the gradient of the second characteristic is altered in dependence on the comparison.

## Revendications

1. Dispositif de transport pour un fluide, en particulier pour le transport d'une laque dans une installation de laquage, comprenant
- une pompe (3, 3') avec un débit réglable pour le transport du fluide,
- une conduite (2, 2') raccordée à la pompe (3, 3') pour l'acheminement du fluide,
- un régulateur (4, 4') et/ou une commande pour le réglage du débit de la pompe (3, 3') en fonction d'une valeur prescrite (Q_{SOLL}) prédéfinie, le régulateur (4, 4') ou la commande présentant un comportement à la saturation (K_{D}) prédéfini,
- une unité d'adaptation (7, 7') pour l'adaptation du comportement à la saturation (K_{D}),
- un capteur de pression disposé en aval de la pompe (3, 3'), auquel l'unité d'adaptation (7, 7') est raccordée côté entrée,
**caractérisé en ce que**
l'unité d'adaptation (7, 7') adapte automatiquement le comportement à la saturation (K_{D}) en fonction de la pression (p_{IST}) déterminée selon la viscosité du fluide, afin d'économiser une entrée manuelle de la viscosité.

2. Dispositif de transport selon la revendication 1, **caractérisé en ce que** l'unité d'adaptation (7, 7') est reliée côté entrée à un capteur de flux de fluide pour la mesure du flux de fluide (Q_{IST}), l'unité d'adaptation (7, 7') adaptant le comportement à la saturation (K_{D}) également en fonction du flux de fluide (Q_{IST}) mesuré.

3. Dispositif de transport selon la revendication 2, **caractérisé en ce que** le capteur de flux de fluide est disposé à la sortie de la conduite (2, 2').

4. Dispositif de transport selon l'une quelconque des revendications précédentes, **caractérisé en ce que** le capteur de pression est disposé à la sortie de la pompe (3, 3') en amont de la conduite (2, 2') et mesure la pression de sortie de pompe (p_{IST}).

5. Dispositif de transport selon l'une quelconque des revendications précédentes, **caractérisé en ce que** l'unité d'adaptation (7, 7') présente un premier élément de courbe caractéristique (9, 9'), dans lequel est stockée une première courbe caractéristique spécifique à l'installation, la première courbe caractéristique définissant le rapport entre la pression (p_{SOLL}) et un paramètre de saturation (K_{D}) déterminant le comportement à la saturation.

6. Dispositif de transport selon l'une quelconque des revendications précédentes, **caractérisé en ce que** l'unité d'adaptation (7, 7') présente un second élément de courbe caractéristique (8, 8'), dans lequel une seconde courbe caractéristique dépendante de la viscosité est mémorisée, la seconde courbe caractéristique restituant le rapport entre la valeur prescrite (Q_{SOLL}) pour le débit ou le flux de fluide (Q_{IST}) d'une part et la pression (p_{IST}) résultante d'autre part.

7. Dispositif de transport selon les revendications 5 et 6, **caractérisé en ce que** la première courbe caractéristique est spécifique à l'installation, alors que la seconde courbe caractéristique est spécifique au fluide.

8. Dispositif de transport selon la revendication 6 ou 7, **caractérisé en ce que** l'unité d'adaptation (7) présente une unité d'analyse (10), l'unité d'analyse (10) destinée à déterminer le rapport spécifique à l'adaptation et au fluide entre le flux de fluide (Q_{IST}) et la pression résultante (P_{IST}) est reliée côté entrée au capteur de pression et au capteur de flux de fluide, alors que l'unité d'analyse (10) est reliée côté sortie au second élément de courbe caractéristique (8), afin de régler la seconde courbe caractéristique en fonction du rapport déterminé.

9. Dispositif de transport selon la revendication 6 ou 7, **caractérisé en ce que** l'unité d'adaptation présente une unité d'analyse (10', 11'),
l'unité d'analyse (10', 11') étant reliée côté entrée au capteur de pression et au second élément de courbe caractéristique (8'), afin de vérifier le caractère exact de la seconde courbe caractéristique à l'aide de la pression mesurée et du flux de fluide mesuré,
alors que l'unité d'analyse (10', 11') est reliée côté sortie au second élément de courbe caractéristique (8'), afin de régler la seconde courbe caractéristique en fonction du contrôle.

10. Dispositif de transport selon l'une quelconque des revendications précédentes, **caractérisé en ce que** le régulateur (4, 4') actionne la pompe (3, 3') avec une grandeur de commande (U) et recycle dans une boucle de rétroaction (5, 5') une grandeur de réglage (Q_{IST}) déterminée sur la conduite (2, 2') en aval de la pompe (3, 3').

11. Dispositif de transport selon la revendication 10, **caractérisé en ce que** la grandeur de réglage (Q_{IST}) est le flux de fluide mesuré par le capteur de flux de fluide.

12. Dispositif de transport selon l'une quelconque des revendications précédentes, **caractérisé en ce que** le régulateur (4, 4') présente un élément différentiel.

13. Dispositif de transport selon l'une quelconque des revendications précédentes, **caractérisé en ce que** le régulateur (4, 4') est un régulateur PD (4, 4') ou un régulateur PID (4, 4').

14. Installation de laquage comprenant un dispositif de transport selon l'une quelconque des revendications précédentes.

15. Procédé d'exploitation pour un dispositif de transport pour un fluide, en particulier dans une installation de laquage, comprenant les étapes suivantes :
- spécification d'une valeur prescrite (Q_{SOLL}) pour le réglage du débit d'une pompe (3, 3'), à laquelle une conduite (2, 2') est raccordée pour l'acheminement du fluide,
- saturation de la pompe (3, 3') en fonction de la valeur prescrite (Q_{SOLL}) prédéfinie avec un comportement à la saturation (K_{D}) prédéfinie,
- adaptation du comportement à la saturation (K_{D}),
**caractérisé en ce que**,
le comportement à la saturation (K_{D}) est adapté automatiquement en fonction de la viscosité du fluide, afin d'économiser une entrée manuelle de la viscosité.

16. Procédé d'exploitation selon la revendication 14, **caractérisé par** les étapes suivantes :
- détermination de la pression (p_{IST}) en aval de la pompe (3, 3'),
- adaptation du comportement à la saturation (K_{D}) en fonction de la pression (p_{IST}) déterminée en fonction de la viscosité du fluide.

17. Procédé d'exploitation selon la revendication 16, **caractérisé en ce que** l'adaptation du comportement à la saturation (K_{D}) s'effectue seulement en fonction de la valeur prescrite (Q_{SOLL}) et de la valeur (p_{IST}) déterminée.

18. Procédé d'exploitation selon l'une quelconque des revendications 15 à 17, **caractérisé par** les étapes suivantes :
- détermination du débit de la pompe (3, 3') ou du flux de fluide (Q_{IST}) transporté,
- adaptation du comportement à la saturation (K_{D}) en fonction du débit déterminé ou du flux de fluide (Q_{IST}) déterminé en fonction de la viscosité du fluide.

19. Procédé d'exploitation selon l'une quelconque des revendications 15 à 18, **caractérisé par** les étapes suivantes :
- détermination d'une première courbe caractéristique qui restitue le rapport entre la pression (p_{SOLL}) et le comportement à la saturation (K_{D}) spécifique,
- détermination de la pression (p_{SOLL}) correspondant à la valeur prescrite (Q_{SOLL}) prédéfinie pour le débit
- détermination du comportement à la saturation (K_{D}) à partir de la pression (p_{SOLL}) en fonction de la première courbe caractéristique.

20. Procédé d'exploitation selon la revendication 19, **caractérisé par** les étapes suivantes :
- détermination d'une seconde courbe caractéristique qui restitue le rapport entre le débit de la pompe (3, 3') ou le flux de fluide (Q_{SOLL}) d'une part et la pression (p_{SOLL}) résultante d'autre part,
- détermination de la pression (p_{SOLL}) à partir de la valeur prescrite (Q_{SOLL}) prédéfinie pour le débit de la pompe (3, 3') ou le flux de fluide.

21. Procédé d'exploitation selon les revendications 19 et 20, **caractérisé en ce que** la première courbe caractéristique est spécifique à l'installation, alors que la seconde courbe caractéristique est spécifique au fluide.

22. Procédé d'exploitation selon l'une quelconque des revendications 15 à 21, **caractérisé en ce que** l'adaptation du comportement à la saturation (K_{D}) s'effectue en fonction de la viscosité du fluide en dehors de l'exploitation de transport normale, une plage de débit prédéfinie de la pompe (3, 3') étant traversée.

23. Procédé d'exploitation selon l'une quelconque des revendications 15 à 22, **caractérisé en ce que** l'adaptation du comportement à la saturation (K_{D}) s'effectue pendant l'exploitation de transport normale.

24. Procédé d'exploitation selon l'une quelconque des revendications 15 à 23, **caractérisé par** les étapes suivantes :
- comparaison de la pression (p_{IST}) déterminée en aval de la pompe (3') avec la pression (p_{SOLL}) déterminée à l'aide de la seconde courbe caractéristique en fonction de la valeur prescrite (Q_{SOLL}) prédéfinie,
- adaptation de la seconde courbe caractéristique en fonction de la comparaison.

25. Procédé d'exploitation selon la revendication 24, **caractérisé en ce que** la pente de la seconde courbe caractéristique est modifiée en fonction de la comparaison.
